# EUROPEAN PATENT APPLICATION

(11) **EP 4 834 751 A1**
(43) Date of publication of application: **04.11.2026**
(21) Application number: 25173942.1
(22) Date of filing: 02.05.2025
(51) Int. Cl.: B64C 3/56

(54) **LATCHING ASSEMBLY AND ACTUATION UNIT COMPRISING SUCH LATCHING ASSEMBLY**

(71) Applicant: AIRBUS Operations GmbH, 21129 Hamburg (DE)
(72) Inventor: WINKELMANN, Christoph, 21129 Hamburg (DE); KEDOR, Florian, 21129 Hamburg (DE)
(74) Representative: Isarpatent

(57) **Abstract**

The present invention provides a latching assembly comprising two hinged levers (42) rotatably mounted around a hinge axis (18) and a latching unit (16) provided within the hinge levers (42), with the latching unit (16) comprising at least two latching pins (26) each loaded by a spring (34), and a rotatable shaft (22) extending in a longitudinal direction of the hinge axis (18), with the shaft (22) being provided with radially protruding fin (24) structures each operatively linked with the latching pins (26), wherein by rotating the shaft (22) the latching pins (26) are radially moveable in an engaged or disengaged position within corresponding latching recesses (38) provided in the hinge lever (42) an actuation unit (10) comprising at least one latching assembly, an aircraft wing and an aircraft having such wing.

## Description

The present invention pertains to a latching assembly, an actuation unit, an aircraft wing, and an aircraft having such wing.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft or other installation environments.

There is a trend towards increasingly large passenger aircraft with higher performance efficiency (for example fuel burn reduction), for which it is desirable to have correspondingly large wing spans. However, the maximum aircraft span is effectively limited by airport operating rules which govern various clearances required when manoeuvring around the airport (such as the span and/or ground clearance required for gate entry and safe taxiway usage). To solve this problem, it is known to provide a passenger aircraft with foldable wings. The foldable wing typically comprises an inner region and an outer region, the outer region being moveable relative to the inner region between a) a flight configuration for use during flight, and b) a ground configuration for use during ground-based operations. In the ground configuration the outer region is moved (typically rotated) relative to the inner region such that the span of the wing is reduced. Thus, the aircraft can still adhere to airport operating rules yet benefit from the larger span in flight. Known actuator assembly for moving a movable aerodynamic surface of an aircraft comprise an input section for introducing an externally provided rotary motion into the actuator assembly, and a geared rotary actuator having at least one actuator and at least one clutch connected to the geared rotary actuator designed to couple the movable surface with the input section and to selectively decouple the movable surface from the input section, such that it is freely movable. A latching unit as provided therein is controlling the high-speed shaft, input shaft or sun gear shaft of the geared rotary actuators whereas also safety brakes which are latching the output of the geared rotary actuator are used. To create a defined position for the latching and unlatching process in the extended position of the wing these systems required to drive the folding wing approximately into the latching position Teeth of a tooth brake or pins of a latching drum then force the folding wing into the defined position for the latching process when the latching elements are moved into the latched position by the latching actuation. These systems offer only limited ability to compensate for misalignment and bending of the wing tip during operation. In addition, these systems only allow for small tolerances in the wing tip position when activating the latching unit.

Against this background, it is an object of the present invention to find a latching assembly allowing a more efficient latching with improved misalignment and tolerance compensation during operation.

This object is achieved by a latching assembly having the features of claim 1, an actuation unit having the features of claim 8, an aircraft wing having the features of claim 13, and an aircraft having the features of claim 14.

According to a first aspect of the invention, a latching assembly comprising two hinged levers rotatably mounted around a hinge axis with a latching unit within the hinge levers is provided, with the latching unit comprising at least two latching pins each loaded by a spring and a rotatable shaft extending in a longitudinal direction of the hinge axis, with the shaft being provided with radially protruding fin structures, each operatively linked with the latching pins, wherein by rotating the shaft the latching pins are radially moveable in an engaged or disengaged position within corresponding latching recesses provided in the hinge lever.

It is an idea of the invention to provide a latching assembly that is configured to latch a lever in two position. This is of particular advantage in actuated wing tips, since the assembly allows to latch said wing tip in upright and in-flight condition. Therein the latching will be realized by the at least two latching pins which move out into the hinge part which has to be latched. The latching assembly of the invention can comprise more than two latching pins, in particular four or several groups of four, which are distributed around the rotatable shaft equidistant to each other. As an additional advantage the configuration has multiple load paths which distribute the flight or resting loads over the amount of integrated latching pins.

A further aspect of the invention lies in an actuation unit comprising at least one latching assembly according to the invention. The advantage of this latching unit is that the latching will be realized by multiple pins which move out into the hinge part which has to be latched. Additional advantage is that the design has multiple load paths which distribute loads over the amount of integrated latching pins. The actuation unit hence offers the ability to compensate for misalignment and bending of the wing tip during operation and can provide a safety-brake function. In addition, the unit allows for bigger tolerances in the lever positioning when activating the latching unit.

A further aspect of the invention lies in an aircraft wing having a fixed wing part and a wing tip foldable relative to the fixed wing part about a hinge axis by means of the actuation unit according to the invention. The actuation of the wing tip is established by means of at least one actuation unit of the invention. It is an idea of the invention to allow for the use of larger wingspan in flight, while the wing tip section can be folded up on the ground to comply with airport regulations by combining actuation and latching/locking into one system. During folding up and extension, then actuation unit allows for compensation of misalignment and bending of the wing tip during operation. In addition, the unit can provide a safety-brake function and allows for bigger tolerances in the tip positioning when activating the latching unit. Furthermore, using the aircraft wing according to the invention results in an improved use of available space and reduced complexity in the assembly process due to a smaller set-up of the unit.

A further aspect of the invention lies in an aircraft having an aircraft wing according to the invention. The wing consists of a fixed main section and a hinged wing-tip section that is driven by the actuation unit of the invention. This allows the wing tip to be fully deployed in flight for aerodynamic efficiency and folded on the ground to meet structural requirements and space constraints, with improved compensation of misalignment and bending of the wing tip during operation.

Advantageous embodiments and further developments are apparent from the further dependent claims and from the description with reference to the figures.

According to an embodiment of the latching assembly, the at least two latching pins are positioned diametrically opposite of each other in the latching unit. This configuration ensures a balanced and efficient latching mechanism, particularly suited for securing a foldable wing tip of an aircraft since the assembly is designed to distribute loads over multiple latching points, thereby reducing mechanical stress on individual components and increasing overall structural integrity. The positioning of the latching pins accommodates bending and positional deviations in the levers, which commonly occur due to aerodynamic forces and/or during operational conditions. Compared to conventional systems, the assembly of the invention allows for a greater positional tolerance during latching activation. The multiple latching pins ensure that forces are distributed over several contact points, reducing the risk of excessive stress on individual components, and enhancing durability.

According to an embodiment of the invention, each latching pin comprises a pin head that tapers conically towards the latching recess. The shape of the latching pins are designed in a way to cover misalignments and bending, in particular of the wing tip, during operation. The tolerance of the lever, and in particular the wing tip position, to activate the latching is hence bigger compared to the existing latching systems. Additional advantage is that the latching is distributed over several coned latching pins so that a failure of one latching pin will be covered by the others which reduces the criticality of a latching failure.

According to a further embodiment of the invention each latching pin comprises a pin foot arranged opposite the pin head and resting on the fin structure. The pin foot resting on the fin structure of the shaft, ensures controlled radial displacement of the latching pin during actuation. Upon rotation of the shaft, the fin structure pushes the pin foot outward, forcing the pin head to engage with a latching recess in the adjacent hinge structure. When unlatching, the shaft rotates in the opposite direction, allowing the pin foot to move back inward, retracting the pin head from the latching recess, assisted by an integrated spring mechanism. This configuration thus ensures a controlled and predictable movement of the latching pins, ensuring precise engagement during each operation cycle. The pin foot resting on the fin structure ensures direct and effective force application, leading to a smoother latching and unlatching process. Due to the controlled guidance of the latching pins via the pin foot and fin structure, the mechanism can better tolerate positional deviations caused by aerodynamic forces or operational conditions, in particular in a wing tip. The pin foot design improves load distribution across the latching interface, reducing stress on individual components and enhancing overall durability.

According to a further embodiment of the invention, each spring is configured to move each latching pin radially from the engaged to the disengaged position. This embodiment ensures a controlled and reliable release mechanism for the latching unit, particularly in applications such as foldable wing tips in aircraft. Each spring configured to exert a force on each latching pin, ensures automatic retraction from the engaged position when the pin is not actively held in place by the fins of the shaft. When engaging, the rotation of the shaft moves the pin radially outward, forcing the pin head into the latching recess to secure the hinged component. When disengaging, the shaft rotates back, allowing the spring to push the latching pin radially inward, withdrawing the pin head from the latching recess and enabling the hinged component to move freely. The spring-assisted disengagement mechanism ensures that the latching system remains fail-safe by automatically unlatching when the actuator releases control, reducing the risk of jamming or unintended retention. The spring force ensures passive disengagement of the latching pin, eliminating the risk of the pin remaining stuck due to external loads or friction. The spring mechanism compensates for positional variations in the hinged component, ensuring that the latching unit disengages even if slight misalignment occurs. Since the spring assists in retraction, no additional force is needed for disengagement.

According to a further embodiment of the invention, the latching pins are positioned in a housing that is arranged in the lever concentrically with the shaft, with the housing comprising guide sleeves for the latching pins, and wherein the springs are supported on a contact shoulder provided inside the guide sleeve. This embodiment enhances the precision, reliability, and structural integration of the latching mechanism, particularly for securing foldable wing tips in aircraft applications. The integration of guide sleeves ensures precise linear movement of the latching pins, improving alignment. Additionally, the concentric arrangement of the housing and shaft optimizes space utilization within the lever, making the assembly compact and efficient. The guide sleeves advantageously prevent lateral displacement of the latching pins, ensuring a highly controlled and accurate latching process. The springs positioned inside the guide sleeves ensure that the latching pins automatically retract when the actuator disengages, preventing unwanted latching due to power loss or mechanical failure. The constrained movement of the latching pins within the guide sleeves ensures that even under wing bending or slight misalignment, the latching process remains reliable.

According to a further embodiment of the invention, the rotatable shaft is connected to a gearbox. The gearbox ensures precise control over the latching and unlatching process, enabling efficient operation even under varying loads or environmental conditions. The gearbox can therein be provided with fail-safe features, such as manual override or dual-drive redundancy, preventing system failure in case of actuator malfunction. The gearbox-driven shaft can be extended to operate multiple latching units, ensuring synchronized engagement and disengagement across larger actuated structures.

According to a further embodiment of the actuation unit, at least two actuation units are provided with the levers and being connected by a spline connection. This embodiment enhances synchronization, structural integrity, and redundancy, in particular for securing foldable wing tips in aircraft applications. The spline connection ensures that all connected levers move simultaneously, preventing uneven loading and enhancing system operation. By using multiple actuation units connected via a spline connections, the system ensures synchronized and evenly distributed actuation, reducing mechanical stress and enhancing operational reliability. The spline connection ensures that all actuation units operate in unison, preventing misalignment or uneven force distribution. The connection between multiple actuation units allows forces to be shared across multiple points, reducing stress on individual components, and increasing durability. In the event of a failure in one actuation unit, the remaining units continue to function, preventing system-wide failure and ensuring continued operability. The spline connection reinforces the linkage between levers, improving resistance to mechanical loads, vibrations, and external forces. The unit can be extended by adding more actuation units, making it suitable for larger folding wing tips or other movable structures. The spline mechanism therein efficiently transmits torque across connected levers, optimizing the force applied to the latching mechanism.

According to a further embodiment of the actuation unit, at least one rotary actuator is connected with the lever at one axial end of the latching assembly. The placement of the rotary actuator at least at one axial end of the latching assembly ensures efficient actuation with minimal mechanical complexity, reducing the number of required moving parts. By positioning the rotary actuator at one axial end, the system minimizes external protrusions, making it easier to integrate into compact hinge or wing assemblies. The rotary actuator provides accurate torque application, ensuring smooth engagement and disengagement of the latching pins. Additional latching units can be linked to the primary actuator via a spline connection, enabling synchronized operation across multiple latching points. A dual-actuator configuration is also encompassed, with rotary actuators attached to both axial ends of the unit to ensure redundancy and prevent failure due to single-point malfunctions.

According to a further embodiment, the actuation unit is configured as a tip actuation unit in an aircraft wing having a fixed wing part and a wing tip foldable relative to the fixed wing part about a hinge axis, wherein the lever is connected with the wing tip. In this embodiment the actuation unit allows for a precise control of the folding mechanism and secure latching, in particular for large-span aircraft wings with foldable wing tips. This lever-actuated system ensures secure positioning of the wing tip in the flight configuration while allowing controlled retraction for ground operations, optimizing wingspan management in compliance with airport regulations. The lever-driven actuation ensures accurate movement and secure latching of the wing tip, preventing unintended motion due to aerodynamic forces. The concentric arrangement of the lever, shaft, and latching unit allows for a compact design, minimizing additional structural components. The latching mechanism distributes aerodynamic and structural loads across multiple latching points, reducing stress concentrations. The spring-loaded latching pins ensure that the wing tip remains securely locked even in case of actuator failure. Additionally, a dual-actuator system can be implemented to provide backup redundancy. The spring-assisted and fin-guided movement of the latching pins accommodates misalignments and wing bending, ensuring reliable engagement and disengagement. The system advantageously allows for fast and controlled folding of the wing tip, reducing time required for ground operations while maximizing aerodynamic efficiency in flight. The modular configuration enables the use of multiple latching units, actuated by a single or dual drive system, making it adaptable for various aircraft sizes and wingspan requirements.

According to a further embodiment one attachment adapter is provided for connecting to the fixed wing part. The attachment adapter provides a rigid and durable connection between the fixed wing part and the actuation unit and ensures that the latching unit aligns accurately, reducing the risk of misalignment-induced failures. The adapter supports spreading of mechanical loads across a larger area, reducing localized stress and improving fatigue resistance. The attachment adapter advantageously enhances the mechanical integrity of the wing connection, ensuring the foldable wing tip remains securely latched even under high aerodynamic forces. The modular design allows for easy installation, inspection, and replacement, reducing maintenance time and improving serviceability. The attachment adapter can be customized to fit various wing configurations, making it adaptable to different aircraft types and sizes.

The invention will be explained in greater detail with reference to exemplary embodiments depicted in the drawings as appended.
- Fig. 1: depicts a perspective view of an actuation unit according to an embodiment of the invention;
- Fig. 2a, b: depict a sectional views of an actuation unit according to an embodiment of the invention;
- Fig. 3: depicts a perspective view of a latching unit according to an embodiment of the invention;
- Fig. 4: depicts a perspective view of a detail of the latching assembly according to an embodiment of the invention; and
- Fig. 5: depicts and aircraft according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

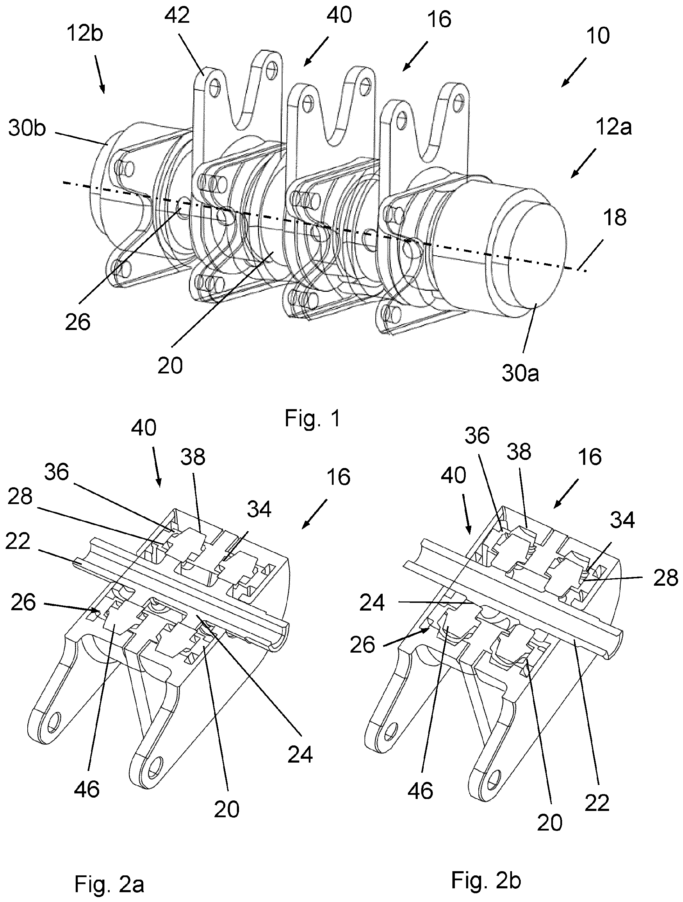

Fig. 1 depicts a perspective view of an actuation unit 10 according to an embodiment of the invention useable for actuation a foldable wing tip 203a, b of an aircraft 200. The actuation unit 10 is configured to secure the foldable wing tip 203a, b with respect to a fixed wing part 202a, b of an aircraft 200. The system comprises multiple latching units 16 arranged along a common hinge axis 18, allowing for synchronized latching and de-latching of the wing tip 203a, b. Each latching unit 16 comprises a housing 20, which supports a rotatable shaft 22 extending through all units along the hinge axis 18. The shaft 22 is equipped with radial fins 24, which engage with latching pins 26, guided within guide sleeves 28 inside the housing 20. The latching pins 26 are arranged symmetrically and are actuated by the rotational movement of the shaft 22. At both axial ends 12a, b of the assembly, rotary actuators 30a, b are connected to the shaft 22, providing the necessary torque to rotate the lever 42 bearing the wing tip 203a, b or other moveable structure. The modular nature of the system allows additional latching units 16 to be added along the hinge axis 18, ensuring even load distribution across multiple latching points. Each latching pin 26 is supported by a spring 34, which is arranged within the guide sleeve 28 and rests on a contact shoulder 36 inside the housing 20. When activated, the shaft 22 rotates, and the radial fins 24 push the latching pins 26 outward into corresponding latching recesses 38 in the hinge mechanism 40, for e. g. latching the wing tip 203a, b in its flight or ground configuration. When disengaging, the reverse rotation of the shaft 22 allows the spring force to retract the latching pins 26, unlatching the wing tip 203a, b for folding or extension. The lever 42, which is part of the hinge mechanism 40, when mechanically connected to the wing tip 203a, b, ensures controlled movement between the fixed wing part 202a, b and the foldable wing tip 203a, b. A connection 44 between the levers 42 ensures synchronized motion across all latching units 16. The modular and scalable design of the actuation unit 10 enables customization for different aircraft or moveable part configurations, ensuring high structural integrity, precise alignment, and fail-safe operation under varying aerodynamic and environmental conditions.

Fig. 2a, b depict sectional views of a latching unit 16 according to an embodiment of the invention. Fig. 2a shows the latched condition, whereas Fig. 2b illustrates the unlatched condition. The latching unit 16 can be part of a foldable wing tip mechanism, designed to secure a wing tip 203a, b relative to a fixed wing part 202a, b without restricting the invention to this use. It comprises a housing 20, which supports and encloses the rotatable shaft 22, latching pins 26, and springs 34, ensuring proper alignment and protection of internal components. The housing 20 is positioned within the hinge mechanism 40, providing an interface while allowing for the necessary movement of the rotatable shaft 22. In the latched position as shown in Fig. 2a, the shaft 22 was rotated such that the radial fins 24 push the latching pins 26 outward, forcing them into latching recesses 38 in the hinge structure 40. The latching pins 26 feature a conical pin head 46, which facilitates self-centring engagement within the latching recesses 38, compensating for misalignment or slight positional deviations of e. g. the wing tip 12. The housing 20 provides precise guidance for the latching pins 26 via guide sleeves 28, ensuring linear radial movement and preventing lateral displacement. The springs 34, which are supported on contact shoulders 36 within the guide sleeves 28, remain compressed, while the latching pins are engaged. The design incorporates multiple load paths, distributing loads across the integrated latching pins 26. This reduces stress concentrations on individual components, ensuring enhanced durability and reliability of the latching mechanism. Additionally, the coned design of the pin heads 46 allows for safe unlatching even under applied loads or in e.g. iced conditions, minimizing the risk of mechanical jamming during disengagement.

In the unlatched position as illustrated by Fig. 2b, the shaft 22 is rotated in the opposite direction, allowing the radial fins 24 to retract, releasing the latching pins 26 from the latching recesses 38. The spring force stored in the springs 34 pushes the latching pins 26 radially inward, disengaging e.g. the wing tip 203a, b and allowing it to fold or extend relative to the fixed wing part 202a, b. The conical pin head 46 allows for smooth disengagement, reducing the required actuation force on both the latching pins 26. The housing 20 ensures a controlled and constrained movement of the latching pins 26, preventing misalignment. The conical shape of the pin heads 46 is particularly beneficial for absorbing dynamic loads, compensating for structural flexing, and ensuring secure engagement under varying operating conditions.

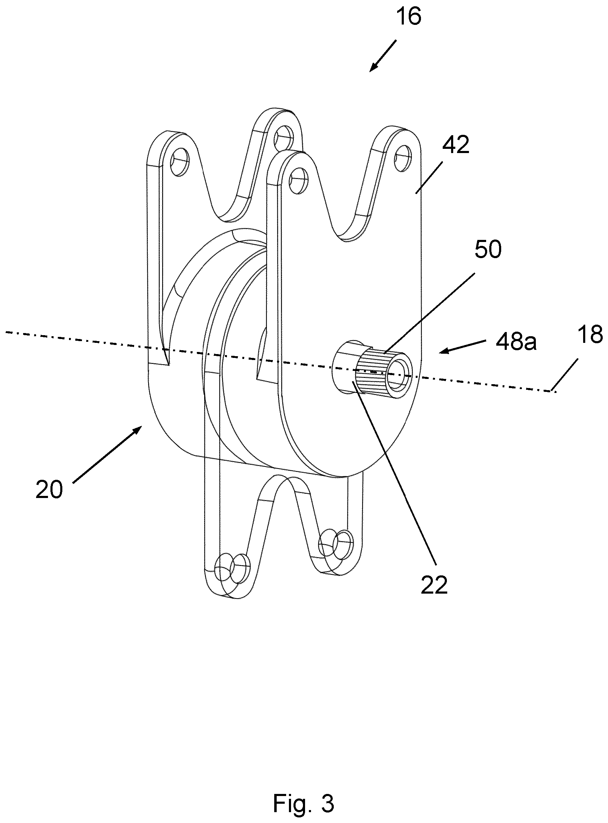

Fig. 3 depicts a perspective view of a latching unit 16 according to an embodiment of the invention. The latching unit 16 can be made part of a modular actuation unit 10 designed to secure e. g. a foldable wing tip 203a, b relative to a fixed wing part 202a, b. It comprises a housing 20, which encases the internal latching mechanism and provides structural support for the rotatable shaft 22. At the protruding shaft end 48a a male splines 50 are provided. This male spline 50 allows for direct coupling with additional latching units 16, ensuring synchronized actuation of multiple units along the hinge axis 18. The male spline 50 enables torque transmission between adjacent latching units 16, ensuring that the rotation of the shaft 22 is evenly distributed across all connected modules. This reduces mechanical stress and enhances the operational reliability of the system. The levers 42, mechanically linked to e. g. the wing tip 12, ensures controlled movement and facilitates the latching and de-latching process. The modular design of the latching unit 16 allows for scalability, meaning multiple units can be connected using the male spline 50 to accommodate e.g. larger wing structures or other moveable elements requiring multiple latching points. By utilizing the male spline 50 for connection, the latching mechanism benefits from efficient load distribution and improved synchronization.

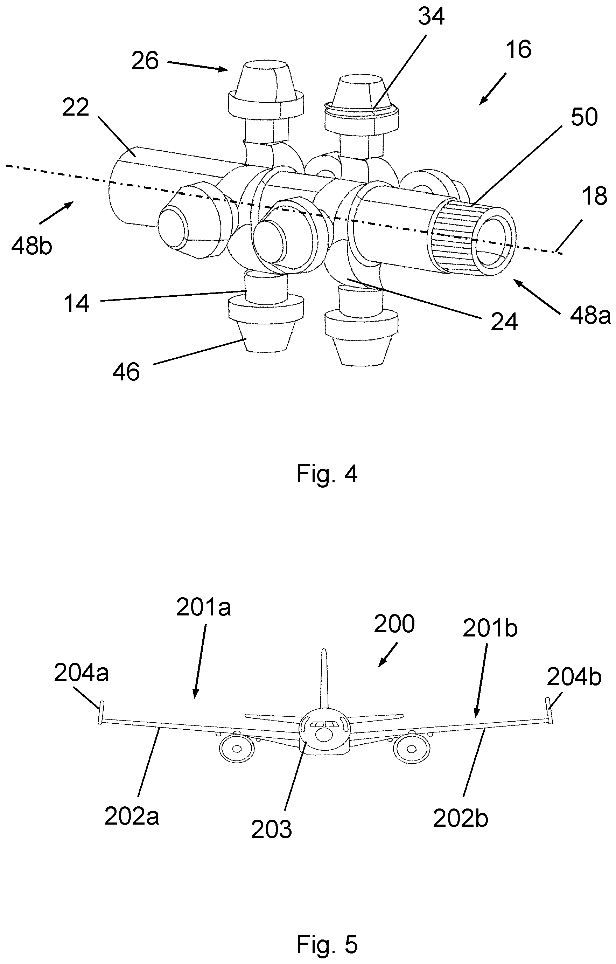

Fig. 4 depicts a perspective view of a detail of the latching unit 16 according to an embodiment of the invention. The illustration specifically shows the shaft 22 and the latching pins 26, highlighting their arrangement, actuation mechanism, and geometric configuration. In the mounted condition the shaft 22 extends along the hinge axis 18 and features multiple radial fins 24, which are designed to engage with the latching pins 26. The latching pins 26 are arranged radially around the shaft 22, positioned at multiple locations along its length to provide even load distribution and secure latching engagement. Each latching pin 26 comprises a pin foot 14, which rests on the radial fins 24, and a conical pin head 46, which facilitates self-centring upon engagement with a latching recess 38 in the hinge structure. The radial fins 24 are integrated along the shaft 22, extend in a circumferential direction around the shaft 22 and serve as actuation elements for the latching pins 26. When the shaft 22 rotates, the radial fins 24 push the pin foot 14 outward, thereby moving the latching pins 26 into the latching recess 38. Conversely, when the shaft 22 rotates back, the spring force from the springs 34 retracts the latching pins 26, disengaging the lock. The conical geometry of the pin heads 46 ensures precise engagement even in the presence of slight misalignments or structural bending of the wing tip 12 or other moveable part. Additionally, this shape reduces the required force for unlatching, allowing for safe unlatching even under applied loads or in iced conditions. At the protruding shaft ends 48a, a male spline 50 is provided, enabling modular integration with additional latching units 16 for synchronized operation by engaging with a female spline at the opposite shaft end 48b of a further unit (not shown).

Fig. 5 schematically depicts an aircraft 200 according to an embodiment of the invention. The aircraft 200 is provided with wings 201a, b. Each wing 201a, b comprises a fixed wing part 202a, b attached to the fuselage 204 and a foldable wing tip 203a, b. The foldable wing tip 203a, b is moveable relative to the fixed wing part 202a, b between a flight configuration for use during flight, and a ground configuration, as shown in Fig. 5, for use during ground-based operations. In the ground configuration the wings tip 203a, b are moved (typically rotated) relative to the fixed wing part 202a, b such that the span of the wings 201a, b is reduced. Thus, the aircraft 200 is able to adhere to airport operating rules yet benefit from the larger span in flight. An actuation unit 10 according to the invention is installed within each wing 201a, b and adapted to the spatial limitation within the wing design by reducing the number of elements, thus reducing space requirements and system complexity. This reduces weight and facilitates the assembly of the aircraft wings 201a, b while improving latching and de-latching operation.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 10: actuation unit
- 12a, b: axial end
- 14: pin foot
- 16: latching unit
- 18: hinge axis
- 20: housing
- 22: shaft
- 24: fin
- 26: latching pin
- 28: guide sleeve
- 30a, b: rotary actuators
- 34: spring
- 36: contact shoulder
- 38: latching recess
- 40: hinge structure
- 42: lever
- 46: pin head
- 44: spline connection
- 48a, b: shaft end
- 50: male spline
- 200: aircraft
- 201a, b: wing
- 202a, b: fixed wing part
- 203a, b: wing tip
- 204: fuselage

## Claims

1. Latching assembly comprising two hinged levers (42) rotatably mounted around a hinge axis (18) and a latching unit (16) provided within the hinge levers (42), with the latching unit (16) comprising at least two latching pins (26) each loaded by a spring (34), and a rotatable shaft (22) extending in a longitudinal direction of the hinge axis (18), with the shaft (22) being provided with radially protruding fin (24) structures each operatively linked with the latching pins (26), wherein by rotating the shaft (22) the latching pins (26) are radially moveable in an engaged or disengaged position within corresponding latching recesses (38) provided in the hinge lever (42).

2. Latching assembly according to claim 1, wherein the at least two latching pins (26) are positioned diametrically opposite of each other in the latching unit (16).

3. Latching assembly according to claim 1 or 2, wherein each latching pin (26) comprises a pin head (46) that tapers conically towards the latching recess (38).

4. Latching assembly according to any one of claims 1 to 3, wherein each latching pin (26) comprises a pin foot (14) arranged opposite the pin head (46) and resting on the fin (24) structure.

5. Latching assembly according to any one of claims 1 to 4, wherein the spring (34) is configured to move the latching pin (26) radially from the engaged to the disengaged position.

6. Latching assembly according to any one of claims 1 to 5, wherein the latching pins (26) are arranged in a housing (20) that is arranged in the lever (42) concentrically with the shaft (22), with the housing (20) comprising guide sleeves (28) for the latching pins (26), and wherein the springs (34) are supported on a contact shoulder (36) provided inside the guide sleeve (28).

7. Latching assembly according to any one of claims 1 to 6, wherein the rotatable shaft (22) is connected to a gearbox.

8. Actuation unit (10) comprising at least one latching assembly according to any one of claims 1 to 7.

9. Actuation unit (10) according to claim 8, wherein at least two actuation units (16) are provided with the levers (42) being connected by a spline connection (44).

10. Actuation unit (10) according to claim 8 or 9, wherein at least one rotary actuator (30a, b) is connected with the lever (42) at one axial end (12a, b) of the latching assembly.

11. Actuation unit (10) according to any one of claims 8 to 10, wherein the actuation unit (10) is configured as a tip actuation unit in an aircraft wing (201a, b) having a fixed wing part (202a, b) and a wing tip (203a, b) foldable relative to the fixed wing part (202a, b) about a hinge axis (18), wherein the lever (42) is connected with the wing tip (203a, b).

12. Actuation unit (10) according to any one of claims 8 to 11, wherein one attachment adapter is provided for connecting to the fixed wing part (202a, b).

13. Aircraft wing (201a, b) comprising a fixed wing part (202a, b) and a wing tip (203a, b) foldable relative to the fixed wing part (202a, b) about a hinge axis (18) by means of the actuation unit (10) according to any one of claims 8 to 12.

14. Aircraft (200) having an aircraft wing (201a, b) according to claim 13.
